Europäisches Patentamt

European Patent Office

Office européen des brevets

(11) Publication number: **0 278 555**
**A1**

(12) **EUROPEAN PATENT APPLICATION**

(21) Application number: **88200161.3**

(22) Date of filing: **01.02.88**

(51) Int. Cl.⁴: **C08K 3/02 , C08K 9/10**

(30) Priority: **11.02.87 GB 8703160**

(43) Date of publication of application:
**17.08.88 Bulletin 88/33**

(84) Designated Contracting States:
**AT BE CH DE ES FR GR IT LI LU NL SE**

(71) Applicant: **BIP CHEMICALS LIMITED**
**20 St. Mary's Parsonage**
**Manchester M3 2NL(GB)**

(72) Inventor: **Williams, Richard Stuart**
**201 Pennine Road**
**Bromsgrove, Worcestershire(GB)**

(74) Representative: **Hadfield, Robert Franklin et al**
**Bowdon House PO Box 20 Ashburton Road**
**West Trafford Park**
**Manchester M17 1RA(GB)**

(54) **Polyamide compositions.**

(57) A polyamide moulding composition with reinforcing mineral fibres contains also red phosphorus and magnesium hydroxide for flame retardancy with good electrical tracking resistance.

The amounts of red phosphorus and magnesium hydroxide may be 4 to 15 per cent by weight and 5 to 40 per cent by weight of the composition respectively, the total of both is not more than 50 per cent by weight of the composition and their amounts are such that

3P + M ≥ 20

where P is per cent by weight of red phosphorus and M is per cent by weight of magnesium hydroxide.

EP 0 278 555 A1

## Polyamide Compositions

This invention relates to polyamide compositions, and more particularly to such compositions which contain flame retardants.

In moulding compositions of polyamides such as nylon 6 and nylon 66 flame retardants are widely used materials and various types are known. For Example brominated or chlorinated compounds may be used, particularly in conjunction with a synergist such as antimony trioxide. These materials, however, lower the electrical tracking resistance of the resulting composition, this being a particularly acute problem in glass-filled systems. Red phosphorus may be employed to obtain a higher tracking resistance with flame retardancy but the tracking resistance is still not as good as desirable in glass filled systems.

We have now found a combination of additives through the use of which high tracking resistance may be attained in combination with good flame retardancy.

According to the invention a polyamide moulding composition comprises a thermoplastic polyamide in an amount of at least 40 per cent by weight of the composition, a flame retardant consisting essentially of red phosphorus, said red phosphorus making up 4 to 15 per cent by weight of the composition, magnesium hydroxide in an amount of 5 to 40 per cent by weight of the composition, and mineral reinforcing fibres in an amount of 5 to 50 per cent by weight of the composition, the total amount of said flame retardant and said magnesium hydroxide being not more than 50 per cent by weight of the composition, and the amounts of red phosphorus and magnesium hydroxide being such that:

$$3P + M \geq 20$$

where P is per cent by weight of red phosphorus in the total composition and M is per cent by weight of magnesium hydroxide in the total composition.

The thermoplastic polyamide is preferably an injection mouldable polymer with a melting point above 180°C, for example, nylon 6 or nylon 66.

The flame retardant has red phosphorus as its essential ingredient but the red phosphorus is preferably treated in order to reduce its handling difficulties, since red phosphorus alone can be very dangerous in handling. Thus the red phosphorus may be carried on a polymeric carrier, and/ or may be encapsulated with a suitable substance such as a polymer or resin.

The magnesium hydroxide is used as a powdered solid material which may be an uncoated or coated commercial grade of material.

We have found that the addition of the magnesium hydroxide has a noticeably beneficial effect on the electrical tracking resistance of the flame retarded composition, and on the erosion resistance of the composition during the test for electrical tracking resistance. In general, by using both the red phosphorus and the magnesium hydroxide it is possible to attain a composition which has both a high tracking resistance and a low flammability eg a V0 flammability rating. In general if the higher loadings of red phosphorus flame retardant are used, less magnesium hydroxide is needed to attain a good tracking resistance with good flammability rating.

If low loadings of phosphorus flame retardant are used a good tracking resistance is obtainable with low loadings of the magnesium hydroxide but to attain good flammability rating the loading of magnesium hydroxide needs to be increased.

We have found that with the lower loadings of phosphorus a small addition of magnesium hydroxide has a markedly beneficial effect on the electrical tracking resistance but a detrimental effect on flammability rating. However, increasing the amount of magnesium hydroxide will restore a good flammability rating. The formula $3P + M \geq 20$ reflects the fact that the amount of red phosphorus needed for a given effect on flammability rating is much less than that of magnesium hydroxide.

Preferably the mineral reinforcing fibres are chopped glass fibres, and preferably the amount of such fibres in the composition is in the range 15 to 35 per cent by weight of the composition.

If desired other ingredients may also be added to the compositions of this invention, such as pigments, stabilisers, lubricants, mineral fillers etc, as is usual in a moulding composition. Other fire retarding agents may also be used but not if they have a detrimental effect on electrical tracking resistance. Thus halogenated fire retardants or antimony trioxide are not to be used.

The invention will now be described in more detail by means of examples.

## Examples

In the following examples all the compositions were made by first blending the ingredients together, then feeding the mixture through a Werner and Pfleiderer ZSK30 extruder under the following conditions.

For Nylon 66 280°C barrel temperatures

For Nylon 6 250°C barrel temperatures

The screw speed used was 300-350 rpm but adjusted where necessary to maintain a reasonable torque. Feed rate was adjusted to give a torque reading between 60 and 95%.

Test mouldings were made from each composition using standard injection moulding techniques and the samples so made were tested for electrical tracking resistance and flammability.

## Electrical Tracking Resistance

The test equipment used is that of the Comparative Tracking Index test of the European Standard (DIN 53480). An aqueous solution containing 0.1% $NH_4C1$ and 0.5% surfactant (Nansa HS 85/S ex Albright and Wilson) was dropped at 30 second intervals on to the surface of the mouldings between two electrodes carrying the applied voltage (up to 600 volts). Platinum electrodes were used, with trips at 0.5 amps and 2 secs.

Results are expressed in the tables below for each applied voltage as "failures" at a stated number of drops, or "passes" at 100 drops total. The erosion of the sample is measured as the weight loss in grammes after the application of 100 drops of solution.

## Flammability Testing

The method used was the standard Underwriters Laboratories test method UL94. V0 means that the specimens burnt for less than 10s after removal of flame, that the total burn time for ten applications of the flame on five specimens was less than 50 seconds. In addition no flaming drops are permitted. In V1 classification no specimen burns for longer than 30 seconds after the application of the flame and the total burning time for 10 specimens is less than 250 seconds. No flaming drops are permitted. The same criteria apply in V2 classification except that some flaming drops are permitted.

In addition to these classifications, the average burning time for each application of flame was calculated and the occurrence of non-flaming drops was noted (10 specimens).

## Examples 1 to 4

A series of compositions of nylon 66 was prepared using as flame retardant granules of encapsulated red phosphorus in a polyamide carrier (70% by weight of red phosphorus). The magnesium hydroxide used was uncoated grade 200--6 (ex Cooksons) and the glass fibres were grade R23D from Owens Corning Fibreglass, chop length 4.5mm.

In table I below the formulations are given in parts by weight.

TABLE I

| Example No. | 1 | 2 | 3 | 4 |
|---|---|---|---|---|
| Nylon 66 | 62.10 | 57.10 | 52.10 | 47.10 |
| Glass Fibre | 25.0 | 25.0 | 25.0 | 25.0 |
| Flame Retardant (70% Red P) | 12.90 | 12.90 | 12.90 | 12.90 |
| Magnesium Hydroxide | – | 5.0 | 10.0 | 15.0 |

NB the above loading of Flame Retardant in the composition corresponds to an amount of 9 per cent by weight of red phosphorus in the total composition.

Table II below shows the results of the tracking and erosion resistance testing on moulded samples.

TABLE II

| Example No. | 1 | 2 | 3 | 4 |
|---|---|---|---|---|
| 600 volts | NT | F/11 | P>100 | P>100 |
| E (g)* | | | 0.104 | 0.048 |
| 500 volts | F/4 | P>100 | P>100 | P>100 |
| E (g)* | | 0.334 | 0.077 | 0.009 |
| 400 volts | F/15 | P>100 | P>100 | P>100 |
| E (g)* | | 0.079 | 0.012 | 0.006 |

*E  is the erosion in g weight lost from the test specimen during a passed test.

NT = not tested          P = pass

F = fail

It can be seen from these results that the addition of the magnesium hydroxide has substantially improved the tracking resistance and increasing loadings of the magnesium hydroxide reduce the extent of erosion during the test very significantly.

Table III below shows the results of the flammability testing on moulded samples.

TABLE III

| Example No. | 1 | 2 | 3 | 4 |
|---|---|---|---|---|
| UL94 test rating | | | | |
| Class    3mm | VO | VO | VO | VO |
| 1.5mm | VO | V1 | VO | VO |
| Burn Time (sec) | | | | |
| 3mm | 0 | 0.9 | 0.4 | 0 |
| 1.5mm | 0.5 | 4.3 | 2.1 | 1.6 |
| Dripping | 3NF at 1.5mm* | None | None | None |

*   NF = non-flaming

It will be noted from these results that although the addition of the lowest level of magnesium hydroxide (5% wt in Example 2) has resulted in the loss of the VO rating on the 1.5mm test the VO rating is restored in this test with higher additions of the hydroxide in examples 3 and 4.

Thus the compositions of Examples 3 and 4 have an extremely high tracking resistance (600 volts) with a VO rating. Even Example 2, with the lowest hydroxide content still has a tracking resistance of 600 volts and a VO rating in the 3mm class in the UL94 test.

Examples 5 to 8

In this series of examples, nylon 66 compositions were prepared using the same ingredients as in examples 1 to 4 but using a lower loading of the red phosphorus flame retardant.

Table IV below gives the formulations of the compositions prepared in parts by weight:

## TABLE IV

| Example No. | 5 | 6 | 7 | 8 |
|---|---|---|---|---|
| Nylon 66 | 67.90 | 57.90 | 52.90 | 47.90 |
| Glass Fibre | 25.0 | 25.0 | 25.0 | 25.0 |
| Flame retardant (70% Red P) | 7.10 | 7.10 | 7.10 | 7.10 |
| Magnesium Hydroxide | – | 10.0 | 15.0 | 20.0 |

B The above loading of Flame Retardant corresponds to 5 per cent by weight of red phosphorus in the total composition.

Table V below gives the results of electrical tracking and erosion resistance testing on samples moulded from these compositions, the abbreviations used in the table being the same as those used in Table II.

## TABLE V

| Example No. | 5 | 6 | 7 | 8 |
|---|---|---|---|---|
| 600 volts | NT | P>100 | P>100 | P>100 |
| E (g) | | | 0.048 | 0.013 |
| 500 volts | F/8 | P>100 | P>100 | P>100 |
| E (g) | | 0.050 | 0.012 | 0.001 |
| 400 volts | P>100 | P>100 | P>100 | P>100 |
| E (g) | 0.282 | 0.016 | 0.015 | 0.005 |

It can be seen from this table that again the addition of the hydroxide has substantially raised the performance of the compositions in the electrical tracking resistance testing, with all the hydroxide containing compositions passing the test at 600 volts.

Table VI below gives the results of the flammability testing of mouldings from the compositions:

TABLE VI

| Example No. | 5 | 6 | 7 | 8 |
|---|---|---|---|---|
| UL94 test | | | | |
| Class 3mm | VO | V1 | V1 | VO |
| 1.5mm | V1 | V2 | V1 | VO |
| Burn time | | | | |
| 3mm | 0.7 | 9.7 | 5.8 | 1.0 |
| 1.5mm | 2.8 | 9.8 | 7.6 | 1.9 |
| Dripping | 3NF at 1.5mm | One flaming at 1.5mm | None | None |

From this table it can be seen that again the addition of the hydroxide has initially increased the flammability of the composition, however comparison of Examples 5 and 8 shows that with increasing hydroxide the rating can eventually be improved to better than that of the original composition with only the red phosphorus flame retardant.

Further testing has shown that similar results can be obtained by the use of the red phosphorus flame retardant and magnesium hydroxide in compositions of nylon 6, wherein again we have obtained compositions having V0 flammability rating with a high electrical tracking resistance.

Examples 9 to 11

In this series of examples, two nylon 6 compositions and a blend of nylon 66/nylon 6 were prepared using the same ingredients as additives as used in the previous examples. Table VII below gives the formulations of the compositions prepared in parts by weight.

7

TABLE VII

| Example No | 9 | 10 | 11 |
|---|---|---|---|
| Nylon 6 | 67.9 | 47.9 | 10.0 |
| Nylon 66 | – | – | 37.9 |
| Flame retardant (70% Red P) | 7.1 | 7.1 | 7.1 |
| Magnesium hydroxide | – | 20.0 | 20.0 |
| Glass fibres | 25.0 | 25.0 | 25.0 |

NB The above loading of Flame Retardant corresponds to 5 per cent red phosphorus.

Table VIII below gives the results of electrical tracking resistance and flammability testing on samples moulded from these compositions, the abbreviations used in the table being the same as those used in Table II.

TABLE VIII

| Example No | 9 | 10 | 11 |
|---|---|---|---|
| Electrical tracking tests | | | |
| 300 volts | P>80 | NT | NT |
| 350 volts | Fail | NT | NT |
| 400 volts | Fail | P>100 | NT |
| 500 volts | NT | NT | P>60 |
| 600 volts | NT | NT | Fail |
| UL94 Test rating | | | |
| Class 3mm | Fail | VO | VO |
| 1.5mm | V2 | VO | VO |

It will be noted that in these electrical tracking resistance tests the testing was curtailed as soon as a conclusive picture could be seen for comparison purposes. Comparison of Example 9 and 10 shows that the tracking resistance has been markedly improved.

Example 11 may be compared with Examples 8 and 5 and it can be seen that the nylon 6 in Example II has reduced the electrical tracking resistance but not to the basic level of nylon 66 + red phosphorus (see Example 5).

In both the examples (10 and 11) using 5% red phosphorus and 20% Magnesium Hydroxide V0 flammability ratings were obtained.

## Examples 12 to 14

In this series of examples nylon 6 compositions were prepared using the same ingredients as before but in this series the amount of red phosphorus was 9 per cent of total composition in each case. The compositions are given in Table IX below in parts by weight.

### TABLE IX

| Example No | 12 | 13 | 14 |
|---|---|---|---|
| Nylon 6 | 62.1 | 57.1 | 52.1 |
| Glass Fibres | 25.0 | 25.0 | 25.0 |
| Flame retardant (70% red P) | 12.9 | 12.9 | 12.9 |
| Magnesium Hydroxide | - | 5.0 | 10.0 |

Table X below gives the results of electrical tracking resistance and flammability testing on samples moulded from these compositions using the same abbreviations and curtailed testing as in Examples 9 to 11.

TABLE X

| Example No | 12 | 13 | 14 |
|---|---|---|---|
| **Electrical Tracking Tests** | | | |
| 250 volts | P>80 | NT | NT |
| 300 volts | Fail | NT | NT |
| 400 volts | Fail | P>100 | P>60 |
| **UL94 Testing** | | | |
| 3mm class | VO | VO | VO |
| 1.5mm class | V2 | VO | VO |

In this case it can be seen that the electrical tracking resistance has been improved by the Magnesium Hydroxide and the good flammability rating has been maintained.

Examples 15 to 17

In this series of examples a blend of nylon 66 and nylon 6 is used with the same ingredients as before but in this case the compositions are also pigmented with a carbon black masterbatch consisting of 20% by weight carbon black and 80% Ethylene-vinyl acetate copolymer. The compositions are given in parts by weight in Table XI below.

TABLE XI

| Example No | 15 | 16 | 17 |
|---|---|---|---|
| Nylon 66 | 58.4 | 53.9 | 49.4 |
| Nylon 6 | 6.5 | 6.0 | 5.5 |
| Glass Fibres | 25.0 | 25.0 | 25.0 |
| Flame Retardant (70% red P) | 7.1 | 7.1 | 7.1 |
| Magnesium Hydroxide | – | 5.0 | 10.0 |
| Carbon Black Masterbatch | 3.0 | 3.0 | 3.0 |

Table XII below gives the results of electrical tracking resistance and flammability testing of samples moulded from these compositions, using the same abbreviations and curtailed testing as in Examples 9 to 11.

TABLE XII

| Example No | 15 | 16 | 17 |
|---|---|---|---|
| Electrical tracking tests | | | |
| 425 volts | F/4 | P>70 | P>64 |
| UL94 Testing | | | |
| 3mm class | VO | VO | VO |
| 1.5mm class | V2 | fail | VO |

Here again, even though carbon black has a detrimental effect on the electrical tracking resistance, the magnesium hydroxide has given improvement. Example 16 is marginally acceptable on flammability rating although it has V0 in the thicker class and is therefore useful for some purposes.

Examples 18 and 19

These two examples compare the effect of the uncoated grade of Magnesium Hydroxide used in earlier examples (200-06 ex Cookson's) with a coated grade (KX-80) from the same supplier. The coated grade is understood to have a chemically bonded coating of an unsaturated fatty acid. Formulations used are given in parts by weight in Table XIII.

TABLE XIII

| Example No | 18 | 19 |
|---|---|---|
| Nylon 66 | 43.9 | 43.9 |
| Glass Fibres | 25.0 | 25.0 |
| Carbon Black masterbatch | 4.0 | 4.0 |
| Flame Retardant (70% Red P) | 7.1 | 7.1 |
| Magnesium Hydroxide (uncoated) | 20.0 | - |
| Magnesium Hydroxide (coated) | - | 20.0 |

Table XIV below gives the results of electrical tracking resistance testing of samples moulded from these compositions, including erosion measurements using abbreviations as used in Table II.

TABLE XIV

| Example No | 18 | 19 |
|---|---|---|
| Electrical tracking tests | | |
| 400 volts | P>100 | P>100 |
| E (g) | 0.011 | 0.032 |
| 500 volts | P>100 | P>100 |
| E (g) | 0.013 | 0.023 |
| 600 volts | P>100 | P>100 |
| E (g) | 0.034 | 0.058 |

It will be noted that there is little difference between the effects of the two grades.

## Claims

1. A polyamide composition comprising a thermoplastic polyamide in an amount of at least 40 per cent by weight of the composition, magnesium hydroxide, and a flame retardant consisting essentially of red phosphorus, characterised in that the composition is a moulding composition, said red phosphorus making up 4 to 15 per cent by weight of the composition, said magnesium hydroxide making up 5 to 40 per cent by weight of the composition, and said composition including mineral reinforcing fibres in an amount of 5 to 50 per cent by weight of the composition, the total amount of said flame retardant and said magnesium hydroxide being not more than 50 per cent by weight of the composition and the amounts of red phosphorus and magnesium hydroxide being such that:

$$3P + M \geq 20$$

where P is per cent by weight of red phosphorus in the total composition and M is per cent by weight of magnesium hydroxide in the total composition.

2. A polyamide moulding composition according to claim 1 in which the polyamide is an injection mouldable polymer with a melting point above 180°C.

A polyamide moulding composition according to claim 2 in which the polyamide is nylon 6 or nylon 66.

4. A polyamide moulding composition according to claim 2 in which the polyamide is a blend of nylon 6 and nylon 66.

5. A polyamide moulding composition according to claim 1 in which the mineral reinforcing fibres are chopped glass fibres.

6. A polyamide moulding composition according to claim 1 in which the amount of mineral reinforcing fibres is in the range 15 to 35 per cent by weight of the composition.

7. A polyamide moulding composition according to claim 1 which is free of halogenated fire retardants and antimony trioxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | FR-A-2 352 024   (HOECHST AG)<br>* Claims 1-3 *<br>--- | 1,5,6 | C 08 K   3/02<br>C 08 K   9/10 |
| A | US-A-4 533 687   (KUNIO ITOH et al.)<br>* Claim 1 *<br>--- | 1 | |
| A | PATENT ABSTRACTS OF JAPAN, vol. 9, no. 125 (C-283)[1848], 30th May 1985; & JP-A-60 13 832 (FURUKAWA DENKI KOGYO K.K.) 24-01-1985<br>* Abstract *<br>--- | 1 | |
| A | CHEMICAL ABSTRACTS, vol. 84, 5th April 1976, page 40, no. 91082b, Columbus, Ohio, US; & JP-A-75 148 447 (MITSUBISHI PETROCHEMICAL CO., LTD.) 21-05-1975<br>* Abstract *<br>----- | 1 | |

TECHNICAL FIELDS
SEARCHED (Int. Cl.4)

C 08 K

The present search report has been drawn up for all claims

| Place of search | Date of completion of the search | Examiner |
|---|---|---|
| THE HAGUE | 03-05-1988 | GLANDDIER A. |

EPO FORM 1503 03.82 (P0401)